# EUROPÄISCHE PATENTSCHRIFT

(11) **EP 4 213 086 B1**
(45) Veröffentlichungstag und Bekanntmachung des Hinweises auf die Patenterteilung: **09.07.2025**
(21) Anmeldenummer: 22212850.6
(22) Anmeldetag: 12.12.2022
(51) Int. Cl.: G06Q 10/20, G06F 3/01

(54) **AUGMENTED-REALITY-SYSTEM ZUM UNTERRICHTEN EINES ANWENDERS EINER APPLIKATION**
AUGMENTED REALITY SYSTEM FOR TEACHING A USER OF AN APPLICATION
SYSTÈME DE RÉALITÉ AUGMENTÉE POUR ENSEIGNER UN UTILISATEUR D'UNE APPLICATION

(30) Priorität: 14.01.2022 DE 102022100840
(43) Veröffentlichungstag der Anmeldung: 19.07.2023
(73) Patentinhaber: SICK AG, 79183 Waldkirch (DE)
(72) Erfinder: HOFMANN, Christoph, Waldkirch (DE); GEBAUER, Jens, Waldkirch (DE); STEINKEMPER, Heiko, Waldkirch (DE)
(74) Vertreter: Manitz Finsterwald Patent- und Rechtsanwaltspartnerschaft mbB

(56) Entgegenhaltungen:
- EP-A1- 3 546 136
- DE-A1- 102018 212 944

## Beschreibung

Die Erfindung bezieht sich auf ein Augmented-Reality-System zum Unterrichten eines Anwenders einer Applikation sowie auf ein entsprechendes Verfahren und ein digitales Endgerät für ein solches Augmented-Reality-System.

Applikationen und insbesondere Industrieapplikationen erfordern heutzutage vermehrt die Interaktion zwischen Mensch und Maschine. Insbesondere wird die Zusammenarbeit zwischen Menschen und beispielsweise Industrierobotern zunehmend räumlich näher und interaktiver.

Derartige Mensch-Maschine-Interaktionen bergen ein erhöhtes Gefahrenpotenzial. So kann es beispielsweise bei solchen Interaktionen zu Unfällen kommen, welche zu Verletzungen beim Menschen führen können. Ferner ergeben sich Produktivitätsdefizite, wenn die Interaktion zwischen Mensch und Maschine nicht optimal aufeinander abgestimmt ist. Folglich besteht ein Bedürfnis die Sicherheit der Interaktion zwischen Mensch und Maschine sowie die Produktivität weiter zu erhöhen.

EP 3 546 136 A1 beschreibt ein Augmented-Reality-System zur Überlappung einer erweiterten Realität mit einer realen Umgebung, bei dem eine momentane Abbildung einer Umgebung und eine virtuelle Abbildung über eine Anzeigeeinheit in Bezug zueinander dargestellt werden. DE 20 2018 212 944 A1 offenbart ein Verfahren zur Unterstützung der Kollaboration zwischen Mensch und Roboter mittels einer Datenbrille, welche ortsbezogenen Informationen visualisiert, wobei unter anderem akustische Signale ausgegeben werden.

Eine der Erfindung zugrundeliegende Aufgabe ist es, ein System und ein Verfahren zur Unterweisung eines Anwenders einer Applikation sowie ein entsprechendes digitales Endgerät zur Unterweisung eines Anwenders einer Applikation bereitzustellen, welche die Sicherheit und/oder Produktivität bei Mensch-Maschine-Interaktionen erhöhen.

Diese Aufgabe wird durch die Gegenstände der unabhängigen Ansprüche gelöst. Weitere vorteilhafte Ausführungsformen sind den Unteransprüchen zu entnehmen.

Die Erfindung betrifft ein Augmented-Reality-System (AR-System) zum Unterrichten eines Anwenders einer Applikation, umfassend:
eine Erfassungseinheit, die eine reale Umgebung erfasst und als Umgebungsdaten bereitstellt, wobei zumindest eine Arbeitseinheit in der Umgebung angeordnet ist;
eine Kommunikationseinheit, die Prozessdaten von der Arbeitseinheit empfängt;
eine Steuereinheit, die die Prozessdaten und Umgebungsdaten verarbeitet, wobei eine virtuelle Abbildung anhand der Prozessdaten erstellbar ist;
eine Anzeigeeinheit, die einem Anwender die reale Umgebung und die virtuelle Abbildung in Bezug zueinander anzeigt; und
eine Audioausgabeeinheit, die auf Basis der Prozessdaten Audiosignale zur Unterweisung eines Anwenders ausgibt, wobei vorzugsweise die Audiosignale auf die virtuelle Abbildung, insbesondere kontextuell und/oder kausal, abgestimmt sind,
wobei eine Unterweisung eine oder eine Mehrzahl der folgenden Komponenten umfasst: Unterrichten eines Anwenders, Schulen eines Anwenders, Belehren eines Anwenders, Unterstützen eines Anwenders, Instruieren eines Anwenders, Angabe von Hinweisen hinsichtlich einer Benutzung der Arbeitseinheit, Angabe von Gefahren- und/oder Warnhinweisen und Angabe von allgemeinen Hinweisen, wobei die Prozessdaten Daten zur Identifizierung eines Prozessschritts der Arbeitseinheit umfassen und die Audioausgabeeinheit ein einem identifizierten Prozessschritt entsprechendes Audiosignal ausgibt und/oder die Anzeigeeinheit eine einem identifizierten Prozessschritt entsprechende virtuelle Abbildung anzeigt, wobei das AR-System einen Speicher umfasst, in dem eine Vielzahl von Audiosignaldaten und/oder Augmentierungsdaten gespeichert sind, wobei die Audiosignaldaten und Augmentierungsdaten den Prozessschritten und/oder Phasen eines Arbeitslebenszyklus zuordenbar und entsprechend kategorisiert sind.

Mit anderen Worten wird eine durch die Erfassungseinheit erfasste reale Umgebung mit einer Abbildung, die mittels Prozessdaten der Arbeitseinheit erstellt wird, überlagert und auf einer Anzeigeeinheit angezeigt. Die Erfassungseinheit kann beispielsweise eine Kamera sein, die Bild- und/oder Videodaten und/oder 3D-bzw. Tiefendaten der realen Umgebung als Umgebungsdaten aufzeichnet. Diese Bild- und/oder Videodaten werden nach dem Senden an die Kommunikationseinheit und der Verarbeitung durch die Steuereinheit als Bild- und/oder Videoaufnahmen auf der Anzeigeeinheit angezeigt. Um eine Unterweisung eines Anwenders zu verbessern, werden die Bild- und/oder Videoaufnahmen der realen Umgebung mit einer virtuellen Abbildung, welche eine Vielzahl von virtuellen Objekten umfassen kann, auf der Anzeigeeinheit in Bezug zueinander angezeigt, d.h. das AR-System verarbeitet die Umgebungsdaten der realen Umgebung und die Prozessdaten der Arbeitseinheit, um die virtuelle Abbildung an die reale Umgebung anzupassen. Insbesondere wird die virtuelle Abbildung in der realen Umgebung so integriert, dass der Anschein entsteht, die virtuelle Abbildung befände sich tatsächlich in der realen Umgebung. Die Audioausgabeeinheit gibt ferner basierend auf den Prozessdaten der Arbeitseinheit Audiosignale zur Unterweisung des Anwenders aus. Vorzugsweise sind die Audiosignale auf die virtuelle Abbildung, insbesondere kontextuell und/oder kausal, abgestimmt, d.h. die Audiosignale unterstützen den durch die virtuelle Abbildung vermittelten Inhalt.

Eine Unterweisung umfasst eine oder eine Mehrzahl der folgenden Komponenten: Unterrichten eines Anwenders, Schulen eines Anwenders, Belehren eines Anwenders, Unterstützen eines Anwenders, Instruieren eines Anwenders, Angabe von Hinweisen hinsichtlich einer Benutzung der Arbeitseinheit, Angabe von Gefahren- und/oder Warnhinweisen und Angabe von allgemeinen Hinweisen. Dabei kann die Unterweisung in Form von gesprochenem Text, insbesondere umfassend mehrere vollständige gesprochene Sätze, Audiosignalen, d.h. einzelnen Tönen, und/oder ähnlichem erfolgen. Beispielsweise kann dem Anwender eine Bedienungsanleitung zum Bedienen der Arbeitseinheit als Audioausgabe bereitgestellt werden.

Die Umgebungsdaten können auch Daten umfassen, die separat zu den Daten der Erfassungseinheit bereitgestellt werden, beispielsweise CAD-Daten, z.B. in Form eines virtuellen Oberflächenmodells der Arbeitseinheit und/oder der Umgebung. Auf diese Weise kann dann mittels der Umgebungsdaten festgestellt werden, dass sich die Arbeitseinheit einer Wand oder einem anderen Gegenstand in der Umgebung nähert. Beispielsweise können dadurch Quetschgefahren automatisch vom AR-System erkannt werden, wenn z.B. ein Werkzeug oder ein anderer Teil der Arbeitseinheit einen vorbestimmten Abstand zu einem Gegenstand in der Umgebung unterschreitet. Auf diese Weise kann es ermöglicht werden, z.B. (automatische) nachträgliche Änderungen der Bewegungen der Arbeitseinheit zu berücksichtigen. So kann insbesondere in der Unterweisung berücksichtigt werden, dass die Arbeitseinheit in die Lage versetzt kann, eigenständig Entscheidungen zu treffen und beispielsweise geänderte Bewegungen ausführt.

Den Audiosignalen kann dabei eine besondere Rolle in der Erhöhung der Sicherheit zukommen. So kann der Anwender jederzeit, auch wenn er z.B. den Blick auf die Arbeitseinheit gerichtet hat und grafische Hinweise in diesem Moment nicht erfassen kann, die Audiosignale wahrnehmen und somit Hinweise erhalten, die seine Sicherheit erhöhen.

Insbesondere können die Audiosignale Warnhinweise, Verhaltensregeln und -anweisungen, Bedienungshilfen bzw. -anleitungen und/oder andere für die Unterweisung nützliche Audiosignale umfassen. Die virtuelle Abbildung kann beispielsweise eine virtuelle Abbildung der Arbeitseinheit bzw. eine virtuelle Abbildung der Bewegung der Arbeitseinheit, geometrische Formen wie beispielsweise Kreise, Rechtecke, Dreiecke und/oder andere geometrische Formen, farbliche Markierungen oder Hervorhebungen und/oder andere für eine Unterweisung nützliche Abbildungen umfassen, zum Beispiel auch textbasierte Darstellungen z.B. von Prozessparametern.

Weitere Ausführungsformen der Erfindung sind der Beschreibung, den Unteransprüchen sowie den Zeichnungen zu entnehmen.

Erfindungsgemäß umfassen die Prozessdaten Daten zur Identifizierung eines Prozessschritts der Arbeitseinheit und gibt die Audioausgabeeinheit ein einem identifizierten Prozessschritt entsprechendes Audiosignal aus und/oder zeigt die Anzeigeeinheit eine einem identifizierten Prozessschritt entsprechende virtuelle Abbildung an. Insbesondere sind das Audiosignal und die virtuelle Abbildung aufeinander abgestimmt, d.h. der Inhalt der virtuellen Abbildung wird durch das Audiosignal unterstützt. Beispielsweise kann ein Prozessschritt der Applikation durch die virtuelle Abbildung über die Anzeigeeinheit dargestellt werden, während gleichzeitig die Audioausgabeeinheit relevante Hinweise, Informationen und/oder eine Beschreibung des Prozessschritts über das Audiosignal ausgibt. Der Anwender erfährt somit eine Unterweisung über verschiedene Sinneswahrnehmungen, wodurch die Qualität der Unterweisung sowie die Aufnahme der Informationen durch den Anwender verbessert und Fehlinterpretationen der visuellen Information minimiert werden können.

Erfindungsgemäß umfasst das AR-System einen Speicher, in dem eine Vielzahl von Audiosignaldaten und/oder Augmentierungsdaten gespeichert ist, wobei die Audiosignaldaten und Augmentierungsdaten den Prozessschritten und/oder Phasen eines Arbeitslebenszyklus (z.B. Inbetriebnahme oder Wartung) zuordenbar sind.

Die Audiosignaldaten und/oder Augmentierungsdaten sind ferner kategorisiert, d.h. Audiosignal- und/oder Augmentierungsdaten, die einem bestimmten Prozessschritt und/oder einer bestimmten Phase eines Arbeitslebenszyklus zugeordnet sind, sind in dem Speicher gruppiert. Insbesondere können die Audiosignal- und/oder Augmentierungsdaten als Audiosignal- und/oder Augmentierungsdateien gespeichert sein. Eine Kategorisierung bzw. Gruppierung der Audiosignal- und/oder Augmentierungsdaten nach Prozessschritt und/oder Arbeitslebenszyklus hilft dabei, unterschiedliche Risiken bei der Interaktion zwischen Anwender und Applikation zu berücksichtigen. Die Audiosignal- und/oder Augmentierungsdaten können bei der Lieferung einer Applikation als Audiosignal- und/oder Augmentierungsdateien mitgeliefert werden oder über einen mitgelieferten QR-Code oder über eine Seriennummer auf einem Sensor herunterladbar sein. Alternativ können die Audiosignal- und/oder Augmentierungsdaten auch auf einer Cloud gespeichert sein. In diesem Fall greift das digitale Endgerät über die Cloud auf die entsprechenden Audiosignal- und/oder Augmentierungsdaten zu. Somit kann der Inhalt einfach aktualisiert werden. Bestimmten Nutzern könnten nach Anforderung (on demand) verschiedene Sprachen frei geschaltet werden.

Gemäß einer weiteren Ausführungsform ist die Audioausgabeeinheit dazu ausgebildet, die Audiodaten, und/oder die Anzeigeeinheit dazu ausgebildet, die Augmentierungsdaten vor einem in Zukunft eintretenden Prozessschritt und/oder zu Beginn eines Prozessschritts abzuspielen.

Insbesondere wird durch das Abspielen der Audio- und/oder Augmentierungsdaten auf den Beginn eines neuen Prozessschritts, auf veränderte Gegebenheiten bzw. auf einen veränderten Zustand und/oder auf einen Übergang von einem Prozessschritt in den nächsten Prozessschritt hingewiesen. Der Anwender wird somit sowohl mittels des Audiosignals als auch mittels der Abbildung auf der Anzeigeeinheit auf eine Veränderung des aktuellen Zustands hingewiesen. Es reicht dabei aus, dass der Anwender eines der Signale wahrnimmt, sodass die Sicherheit des Anwenders weiter erhöht wird.

Insbesondere kann das AR-System als ein Publisher-Subscriber-System realisiert sein. Beispielsweise kann die Arbeitseinheit zu Beginn eines Prozessschritts ober beim Durchlaufen eines Prozessschritts den Prozessschritt veröffentlichen (Publishing), wobei das digitale Endgerät eine entsprechende Statusänderung abonniert (Subscribing) und entsprechende Audio- und Augmentierungsdaten abspielt. Das Audiosignal und die virtuelle Abbildung können hierdurch optimal auf einen Betrieb der Arbeitseinheit abgestimmt werden.

Gemäß einer weiteren Ausführungsform umfassen die Phasen eines Arbeitslebenszyklus eine Inbetriebnahme, einen Normalbetrieb, eine Wartung, einen Umbau und/oder einen Abbau der Applikation. Insbesondere kann die Phase des Arbeitslebenszyklus anhand der Prozessdaten ermittelt werden. Ferner kann eine Applikation auch weitere Phasen eines Arbeitslebenszyklus als die hier genannten umfassen.

Gemäß einer weiteren Ausführungsform sind das AR-System und die Arbeitseinheit dazu ausgebildet, bidirektional zu kommunizieren, wobei das AR-System dazu ausgebildet ist, die Arbeitseinheit zu steuern und/oder zu beeinflussen.

Mit anderen Worten werden Daten vom AR-System an die Arbeitseinheit gesendet und umgekehrt. Im Gegensatz zu einer unidirektionalen Kommunikation, bei der beispielsweise nur die Arbeitseinheit Daten an das AR-System sendet, können durch die bidirektionale Kommunikation Eingaben im AR-System zu einer Reaktion bzw. Aktion in der Arbeitseinheit führen, d.h. der Betrieb der Arbeitseinheit kann über das AR-System aktiv beeinflusst werden. Beispielsweise kann die Ausführung eines Prozessschritts mittels des digitalen Endgeräts ausgewählt und/oder wiederholt und/oder zeitlich zurückgesetzt werden. Somit ist ein "Stoppen", "Vorspulen" und/oder "Zurückspulen" der Ausführungen des Prozessschritts möglich, d.h. der Anwender kann beispielsweise über eine Zeitachse, die einem Ausführungszeitraum des Prozessschritts entspricht, einen Ausführungszeitpunkt frei wählen. Zusätzlich oder alternativ können N Wiederholungen desselben Prozessschritts erfolgen und das AR-System nach der Ausführung der N Wiederholungen automatisch mit der Ausführung eines nächsten Prozessschritts fortfahren.

Gemäß einer weiteren Ausführungsform ist die Anzeigeeinheit dazu ausgebildet, Textnachrichten anzuzeigen. Insbesondere können die Textnachrichten auf die Audiosignale und die virtuelle Abbildung abgestimmt sein oder aus diesen erzeugt werden durch beispielsweise automatisiert arbeitende "audio-to-text Converter". Neben einem solchen Transkribieren ist auch ein Übersetzen möglich, also dass die Audiodaten in einer anderen Sprache als Text, ähnlich einem Untertitel, dargestellt werden. Ferner können die Textnachrichten als Textdaten in dem Speicher gespeichert sein und entsprechenden Audio- und Augmentierungsdaten zugeordnet sein. Die Textnachrichten können den Anwender zusätzlich zu dem Audiosignal und der virtuellen Abbildung bei einer Unterweisung unterstützen. Die Textnachrichten können auf der Anzeigeeinheit angezeigt werden und einen Untertitel, Handlungs- und/oder Verhaltensvorgaben bzw. -leitlinien, eine Benennung eines Prozessschritts, Warnhinweise und/oder andere für einen Prozessschritt relevante Informationen anzeigen. Audio- und/oder Textdaten können ferner in verschiedenen Sprachen verfügbar sein und ausgegeben werden.

Gemäß einer weiteren Ausführungsform ist das AR-System ausgebildet, einen Unterweisungsstand des Anwenders mittels eines Tests, insbesondere eines Multiple-Choice-Tests, zu prüfen und basierend auf einem Testergebnis den Unterweisungsstand des Anwenders in einer Anwenderdatenbank einzutragen und/oder zu aktualisieren.

Beispielsweise kann der Test automatisch nach einem Abschluss einer Unterweisung erfolgen. Das Testergebnis kann beispielsweise anhand einer Anzahl an korrekt beantworteten Fragen, einer Anzahl an falsch beantworteten Fragen und/oder einem Verhältnis zwischen korrekt beantworteten und falsch beantworteten Fragen ermittelt werden. Das ermittelte Testergebnis kann einem Unterweisungsstand zugeordnet sein, so dass der Unterweisungsstand anhand des Testergebnisses ermittelt wird. Vorzugsweise kann der Unterweisungsstand des Anwenders zwei oder mehrere Status umfassen. Beispielsweise kann der Unterweisungsstand des Anwenders ab einer festen Anzahl an korrekt beantworteten Fragen "bestanden" sein und "nicht bestanden" sein, wenn die bestimmte Anzahl an korrekt beantworteten Fragen nicht erreicht wird. Der Unterweisungsstand kann auch ein Qualifikationslevel umfassen. Beispielsweise kann das Qualifikationslevel des Anwenders die Status "Anfänger", "Erfahrener Nutzer" und "Experte" umfassen, wobei beispielsweise bei einem Fragenkatalog von zehn Fragen die korrekte Beantwortung von null bis vier Fragen zu dem Status "Anfänger", die korrekte Beantwortung von fünf bis sieben Fragen zu dem Status "Erfahrener Nutzer" und die korrekte Beantwortung von acht bis zehn Fragen zu dem Status "Experte" führen kann.

Es ist auch möglich, dass der Unterweisungsstand und das Qualifikationslevel separate Metriken sind. Beispielsweise kann der Unterweisungsstand - wie oben beschrieben - angeben, ob der Anwender eine Unterweisung erfolgreich absolviert hat, während das Qualifikationslevel unabhängig vom Unterweisungsstand beispielsweise vorab festgelegt wird.

Ferner können Antworten auf Testfragen über ein Touchdisplay eingegeben werden. Beispielsweise kann in einem solchen Fall die Anzeigeeinheit als Touchdisplay ausgebildet sein. Zusätzlich oder alternativ können Antworten des Anwenders auf Testfragen über ein Mikrofon in das AR-System eingegeben werden und mittels einer Spracherkennungssoftware die gesprochene Sprache bzw. die gesprochenen Antworten erkannt werden.

Die Anzeigeeinheit kann z.B. einen Bildschirm umfassen, auf welchem die Umgebungsdaten (beispielsweise ein von der Erfassungseinheit aufgenommenes Bild oder Video) und darüber überlagert die virtuelle Abbildung angezeigt werden. Die Anzeigeeinheit kann auch eine AR-Brille umfassen. Bei einer AR-Brille als Anzeigeeinheit kann die reale Umgebung dem Anwender durch einen zumindest Teilweise lichtdurchlässigen Teil der AR-Brille angezeigt werden, wobei die virtuelle Abbildung für den Anwender sichtbar projiziert wird.

Bei einem erfolgreichen Testabschluss kann ein Zertifikat ausgestellt werden, welches in der Anwenderdatenbank gespeichert wird, wobei eine Gültigkeit des Zertifikats nach einer festgelegten Zeitdauer, beispielsweise sechs Monate, ablaufen kann. Das Ablaufdatum oder eine Gültigkeitsdauer kann in der Anwenderdatenbank hinterlegt werden. Nach Ablauf der Gültigkeit des Zertifikats kann der Anwender zur Auffrischung eines Unterweisungsstands durch das AR-System bzw. das digitale Endgerät aufgefordert werden.

In der Anwenderdatenbank werden beispielsweise Daten zu einem Anwender, insbesondere Daten, die Informationen zu einem Qualifikationsstand eines Anwenders im Hinblick auf eine Unterweisung wiedergeben, hinterlegt. Weitere Daten der Anwenderdatenbank umfassen beispielsweise eine Mitarbeiter-Nummer, einen Vornamen, einen Nachnamen, eine Berufsbezeichnung, einen Unterweisungsstand hinsichtlich einer Applikation, ein Unterweisungszertifikat, ein Datum einer letzten Unterweisung und/oder ein Ablaufdatum des einer Unterweisung entsprechenden Zertifikats und/oder eine Gültigkeitsdauer des einer Unterweisung entsprechenden Zertifikats, ein Qualifikationslevel, biometrische Daten eines Anwenders und/oder andere Daten.

Gemäß einer weiteren Ausführungsform umfasst das AR-System eine Unterweisungsstandermittlungseinheit, die dazu ausgebildet ist, eine Identität des Anwenders anhand von Personenidentifikationsdaten zu ermitteln und den Unterweisungsstand des Anwenders anhand der ermittelten Identität mittels der Anwenderdatenbank zu ermitteln.

Beispielsweise können die Personenidentifikationsdaten über eine Gerätenummer des digitalen Endgeräts, über ein Anmelden einer Person in einem System einer Datenbank mittels eines Passworts, über biometrische Daten einer Person, beispielsweise durch eine Fingerabdruck- und/oder Gesichtserkennung, erfasst werden. Beispielsweise können der Fingerabdruck und/oder das Gesicht des Anwenders mittels eines Fingerabdrucksensors und/oder einer Kamera erfasst werden und mit einem in der Anwenderdatenbank gespeicherten Fingerabdruck und/oder Gesicht mindestens eines Anwenders verglichen werden, um die Identität des Anwenders zu ermitteln.

Gemäß einer weiteren Ausführungsform ist die Arbeitseinheit dazu ausgebildet, einen Betriebsmodus der Arbeitseinheit basierend auf dem Unterweisungsstand des Anwenders einzustellen.

Die Arbeitseinheit kann hierfür Daten zum Unterweisungsstand des Anwenders empfangen und auf der Grundlage der empfangenen Daten Sicherheitsparameter auslegen bzw. anpassen. Beispielsweise kann das AR-System nach erfolgreicher Identifizierung des Anwenders und nach einer erfolgreichen Ermittlung des Unterweisungsstands des Anwenders die Daten zum Unterweisungsstand des Anwenders an die Arbeitseinheit senden, welche beispielsweise die Geschwindigkeit, mit der die Arbeitseinheit sich bewegt, an den Unterweisungsstand des Anwenders anpasst. Für einen Anwender, der beispielsweise ein gültiges Unterweisungszertifikat in der Anwenderdatenbank hinterlegt hat, kann die Arbeitseinheit im Normalbetrieb, d.h. ohne eine Reduktion der Geschwindigkeit, betrieben werden, während für einen Anwender, für den in der Anwenderdatenbank kein gültiges Unterweisungszertifikat hinterlegt ist, die Arbeitseinheit mit reduzierter Geschwindigkeit betrieben wird oder den Arbeitsbetrieb stoppt. Durch eine entsprechende Anpassung des Betriebsmodus der Arbeitseinheit an den Unterweisungsstand des Anwenders kann somit eine erhöhte Sicherheit und Produktivität sichergestellt werden.

Gemäß einer weiteren Ausführungsform ist das AR-System dazu ausgebildet, einen Nutzungsbereich und/oder Inhalte des AR-Systems basierend auf dem Unterweisungsstand des Anwenders zu beschränken oder zu erweitern.

Beispielsweise können Nutzungsrechte und ein Zugriff auf Inhalte des AR-Systems basierend auf dem Unterweisungsstand und/oder dem Qualifikationslevel des Anwenders eingestellt werden. Beispielsweise kann der Anwender basierend auf seinem individuellen Unterweisungsstand und/oder Qualifikationslevel Nutzungsrechte zum Nutzen vorbestimmter Funktionen des AR-Systems haben, die seinem Unterweisungsstand zugeordnet sind. Die Funktionen des AR-Systems können beispielsweise ein Durchführen unterschiedlicher Unterweisungen, ein Steuern des Roboters und/oder ein Aufrufen von unterschiedlichen Inhalten des AR-Systems umfassen. Anwender können hierfür beispielsweise in die Qualifikationslevel "Experte", "erfahrener Nutzer" und "Anfänger" eingeteilt werden. Ein Anwender des Qualifikationslevels "Experte" kann die volle Funktionalität des AR-Systems nutzen und z.B. auch auf Inhalte hinsichtlich Inbetriebnahmen und Wartungen der Arbeitseinheit zugreifen. Ein Anwender des Qualifikationslevels "erfahrener Nutzer" kann beispielsweise ebenfalls alle Funktionen des AR-Systems nutzen und hat Zugriff auf Informationen über Änderungen in der Applikation; jedoch keinen Zugriff auf Inhalte hinsichtlich der Inbetriebnahme und Wartung der Arbeitseinheit. Ein Anwender des Qualifikationslevels "Anfänger" hingegen kann beispielsweise nur bestimmte vorab festgelegte Funktionen des AR-Systems nutzen, erhält ebenfalls Informationen über Änderungen in der Applikation und hat beispielsweise Zugriff auf Weiterbildungsangebote in Form von Unterweisungen, um das Qualifikationslevel zu erhöhen und zum "erfahrenen Nutzer" aufzusteigen. Mit anderen Worten wird eine Zugänglichkeit zu Funktionalitäten des AR-Systems basierend auf dem Qualifikationslevel und/oder dem Unterweisungsstand des Anwenders eingestellt, d.h. der Nutzungsbereich des AR-Systems wird an die Erfahrung bzw. die Kenntnisse des Anwenders angepasst, und somit eine erhöhte Sicherheit bei der Nutzung einer Applikation geschaffen.

Gemäß einer weiteren Ausführungsform umfasst die reale Umgebung und/oder die Arbeitseinheit eine Markierung, welche von dem AR-System als Bezugspunkt und/oder zum Erkennen der Arbeitseinheit verwendet wird.

Insbesondere wird die Markierung als Bezugspunkt für augmentierte Objekte und insbesondere für die Positionierung der augmentierten Objekte in einem dreidimensionalen Raum verwendet. Hierdurch kann eine verbesserte und realitätsnahe Darstellung der augmentierten Objekte auf der Anzeigeeinheit erreicht werden. Zusätzlich oder alternativ kann das AR-System mittels der Markierung einen Arbeitseinheitstypen ermitteln. Beispielsweise kann die Arbeitseinheit einen Roboter umfassen und die Markierung verwendet werden, um einen Robotertypen, ein Robotermodell und/oder andere Eigenschaften des Roboters zu ermitteln. Die Markierung kann beispielsweise einen QR-Code umfassen, der von der Erfassungseinheit des AR-Systems erfasst wird und Art und Typ der Arbeitseinheit eindeutig festlegt. Hierdurch ist eine einfache Identifizierung der Arbeitseinheit möglich.

Gemäß einer weiteren Ausführungsform ist die Erfassungseinheit von der Anzeigeeinheit und der Kommunikationseinheit räumlich getrennt, d.h. die Erfassungseinheit befindet sich nicht in unmittelbarer Nähe zur Anzeigeeinheit und Kommunikationseinheit, und sendet die Umgebungsdaten mittels Telekommunikation an die Kommunikationseinheit.

Beispielsweise kann sich die Erfassungseinheit in räumlicher unmittelbarer Nähe zur Arbeitseinheit befinden, während sich die Anzeigeeinheit und Kommunikationseinheit nicht in unmittelbarer räumlicher Nähe zur Arbeitseinheit befinden. Insbesondere können sich die Erfassungseinheit und die Anzeigeeinheit bzw. Kommunikationseinheit in unterschiedlichen Räumen oder Gebäuden befinden. Beispielsweise kann die Erfassungseinheit mit der Anzeigeeinheit und Kommunikationseinheit mittels einer LAN-, VPN- und/oder Mobilfunkverbindung kommunizieren, um Daten auszutauschen. Somit ist eine Teleunterweisung des Anwenders möglich, d.h. ein Anwender, der sich nicht in unmittelbarer Nähe der Arbeitseinheit befindet, kann eine Unterweisung aus der Ferne erhalten.

Gemäß einer weiteren Ausführungsform ist eine Überwachungseinheit dazu ausgebildet, einen Überwachungsraum zu überwachen und Sicherheitsdaten an die Kommunikationseinheit zu senden, wobei die Sicherheitsdaten von der Steuereinheit verarbeitet werden, und die Audioausgabeeinheit dazu ausgebildet, ein Audiosignal auszugeben, wenn die Verarbeitung der Sicherheitsdaten ergibt, dass der Anwender den Überwachungsraum der Überwachungseinheit betritt.

Beispielsweise umfasst das Audiosignal ein Warnsignal, welches den Anwender darauf hinweist, dass er einen sicherheitskritischen Bereich, d.h. den Überwachungsraum, betreten hat. Insbesondere kann die Arbeitseinheit zusätzlich den Betriebsmodus wechseln, d.h. beispielsweise die Geschwindigkeit reduzieren oder erhöhen, oder den Arbeitsbetrieb einstellen, d.h. stoppen, wenn der Anwender den Überwachungsraum betritt. Zusätzlich oder alternativ kann die Audioausgabeeinheit dazu ausgebildet sein, das Audiosignal ohne ein Eintreten eines kausalen Events, welches z.B. durch den Anwender und/oder die Arbeitseinheit ausgelöst wurde, auszugeben. Beispielsweise kann das Audiosignal eine auditive Bedienungsanleitung umfassen, d.h. das Audiosignal umfasst eine Tonspur, welche unabhängig von äußeren Ereignissen abgespielt wird.

Es ist auch denkbar, dass das AR-System nicht ausschließlich zur Unterweisung eines Anwenders verwendet wird, sondern beispielsweise zur Kommunikation kausaler Schritte, welche durch den Anwender der Applikation ausgeführt werden sollen. Beispielsweise können dem Anwender über die Audioausgabeeinheit Anweisungen mitgeteilt werden. In einem solchen Fall umfasst das Audiosignal Anweisungen wie beispielsweise "Aufgabe erledigt, bitte Material abtransportieren", "Nachschub benötigt" etc. Somit kann das AR-System zusätzlich als Bedienungshilfe eingesetzt werden.

Die Erfindung betrifft ferner ein Verfahren zum Unterrichten eines Anwenders einer Applikation mittels eines Augmented-Reality-Systems, welches umfasst, dass: eine reale Umgebung erfasst und als Umgebungsdaten bereitgestellt wird,
wobei zumindest eine Arbeitseinheit in der Umgebung angeordnet ist; Prozessdaten von der Arbeitseinheit empfangen werden;
die Prozessdaten und Umgebungsdaten verarbeitet werden, wobei eine virtuelle Abbildung anhand der Prozessdaten erstellt wird;
einem Anwender die reale Umgebung und die virtuelle Abbildung in Bezug zueinander angezeigt werden;
auf Basis der Prozessdaten Audiosignale zur Unterweisung eines Anwenders ausgegeben werden,
wobei vorzugsweise die Audiosignale auf die virtuelle Abbildung abgestimmt sind, wobei eine Unterweisung eine oder eine Mehrzahl der folgenden Komponenten umfasst: Unterrichten eines Anwenders, Schulen eines Anwenders, Belehren eines Anwenders, Unterstützen eines Anwenders, Instruieren eines Anwenders, Angabe von Hinweisen hinsichtlich einer Benutzung der Arbeitseinheit, Angabe von Gefahren- und/oder Warnhinweisen und Angabe von allgemeinen Hinweisen, wobei die Prozessdaten Daten zur Identifizierung eines Prozessschritts der Arbeitseinheit umfassen und die Audioausgabeeinheit ein einem identifizierten Prozessschritt entsprechendes Audiosignal ausgibt und/oder die Anzeigeeinheit eine einem identifizierten Prozessschritt entsprechende virtuelle Abbildung anzeigt, wobei das AR-System einen Speicher umfasst, in dem eine Vielzahl von Audiosignaldaten und/oder Augmentierungsdaten gespeichert sind, wobei die Audiosignaldaten und Augmentierungsdaten den Prozessschritten und/oder Phasen eines Arbeitslebenszyklus zuordenbar und entsprechend kategorisiert sind.

Die Erfindung betrifft außerdem ein digitales Endgerät für ein Augmented-Reality-System zum Unterrichten eines Anwenders einer Applikation, welches umfasst: eine Kommunikationseinheit, die Prozessdaten von zumindest einer Arbeitseinheit und Umgebungsdaten von zumindest einer Erfassungseinheit, die eine reale Umgebung erfasst, empfängt, wobei die Arbeitseinheit in der Umgebung angeordnet ist;
eine Steuereinheit, die die Prozessdaten und Umgebungsdaten verarbeitet, wobei eine virtuelle Abbildung anhand der Prozessdaten erstellbar ist;
eine Anzeigeeinheit, die einem Anwender die reale Umgebung und die virtuelle Abbildung in Bezug zueinander anzeigt;
und eine Audioausgabeeinheit, die auf Basis der Prozessdaten Audiosignale zur Unterweisung eines Anwenders ausgibt,
wobei vorzugsweise die Audiosignale auf die virtuelle Abbildung abgestimmt sind, wobei eine Unterweisung eine oder eine Mehrzahl der folgenden Komponenten umfasst: Unterrichten eines Anwenders, Schulen eines Anwenders, Belehren eines Anwenders, Unterstützen eines Anwenders, Instruieren eines Anwenders, Angabe von Hinweisen hinsichtlich einer Benutzung der Arbeitseinheit, Angabe von Gefahren- und/oder Warnhinweisen und Angabe von allgemeinen Hinweisen,
wobei die Prozessdaten Daten zur Identifizierung eines Prozessschritts der Arbeitseinheit umfassen und die Audioausgabeeinheit ein einem identifizierten Prozessschritt entsprechendes Audiosignal ausgibt und/oder die Anzeigeeinheit eine einem identifizierten Prozessschritt entsprechende virtuelle Abbildung anzeigt,
wobei das AR-System einen Speicher umfasst, in dem eine Vielzahl von Audiosignaldaten und/oder Augmentierungsdaten gespeichert sind, wobei die Audiosignaldaten und Augmentierungsdaten den Prozessschritten und/oder Phasen eines Arbeitslebenszyklus zuordenbar und entsprechend kategorisiert sind.

Für das Verfahren und das digitale Endgerät gelten die Ausführungen zu dem AR-System entsprechend, dies gilt insbesondere hinsichtlich Vorteilen und Ausführungsformen. Es versteht sich, dass sämtliche hierin genannten Merkmale und Ausführungsformen miteinander kombiniert werden können, sofern nicht explizit etwas gegenteiliges angegeben ist.

Nachfolgend wird die Erfindung rein beispielhaft unter Bezugnahme auf die Zeichnungen dargestellt. Es zeigen:
- Fig. 1: eine schematische Darstellung einer realen Umgebung, in der ein Augmented-Reality-System verwendet wird;
- Fig. 2: eine schematische Detaildarstellung eines digitalen Endgeräts des Augmented-Reality-Systems;
- Fig. 3: eine schematische Darstellung einer realen Umgebung, in der das AR-System und eine Überwachungseinheit verwendet werden;
- Fig. 4: eine Ausführungsform des AR-Systems, bei der eine Unterweisung mittels Telekommunikation erfolgt;
- Fig. 5: ein Beispiel für eine Anwenderdatenbank;
- Fig. 6: ein Phasenablaufdiagramm einer Arbeitseinheit und eine zugehörige Audiowiedergabe durch das AR-System.

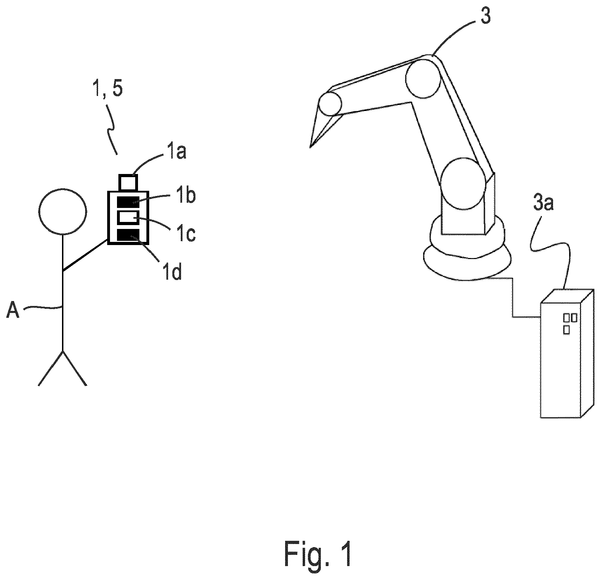

Fig. 1 zeigt eine schematische Darstellung einer realen Umgebung, in der ein Augmented-Reality-System (AR-System) 1 verwendet wird. In Fig. 1 hält sich der Anwender A in der Nähe einer Arbeitseinheit 3 auf, welche als Industrieroboter dargestellt und mit einer Steuerung 3a verbunden ist. Die Steuerung 3a steuert die Arbeitseinheit 3 in ihren Abläufen mittels der in der Steuerung 3a hinterlegten Prozessdaten. Die Prozessdaten können die gesteuerten Abläufe der Arbeitseinheit 3 sowie Informationen zu einem Prozessschritt und/oder zum Arbeitslebenszyklus der Arbeitseinheit 3 umfassen. Die Prozessdaten umfassen insbesondere Bewegungsdaten der Arbeitseinheit 3. CAD-Daten der Arbeitseinheit 3 können auch in den Prozessdaten und/oder Augmentierungsdaten vorgesehen sein, so dass beispielsweise eine maßstabsgetreue Abbildung der Arbeitseinheit 3 dargestellt werden kann. Hierbei kann die Arbeitseinheit 3 auch ein fahrerloses Transportsystem oder eine andersartige Verarbeitungsmaschine umfassen. In diesem Zusammenhang werden unter Bewegungsdaten beispielsweise Steuerungsdaten zum Steuern des Roboters oder zum Fahren des fahrerlosen Transportsystems von einem Ort zum anderen verstanden.

Das von dem Anwender A verwendete erfindungsgemäße AR-System 1 umfasst eine Erfassungseinheit 1a, die die reale Umgebung mit der Arbeitseinheit 3 erfasst. Die erfasste Information stellt die Erfassungseinheit 1a als Umgebungsdaten bereit. Die Erfassungseinheit 1a umfasst vorzugsweise eine eine Raumtiefe erfassende Kamera und/oder eine Weitwinkel-Kamera, so dass die reale Umgebung großräumig und im Detail erfasst ist. Ferner können mittels der Erfassungseinheit 1a dreidimensionale Raumdaten der Umgebung erfasst werden. In diesem Zusammenhang werden unter Umgebungsdaten also Daten von der Kamera verstanden, die als Bilddaten zur Verfügung stehen oder in Bilddaten umgewandelt werden können.

Ferner umfasst das AR-System eine Kommunikationseinheit 1b, die die Prozessdaten von der Arbeitseinheit 3, insbesondere von der Steuerung 3a der Arbeitseinheit 2, empfängt. Das AR-System 1 umfasst weiterhin eine in der Fig. 1 nicht dargestellte Steuereinheit, die die Umgebungsdaten und die Prozessdaten verarbeitet.

Hierbei erstellt die Steuereinheit anhand der Umgebungsdaten und der Prozessdaten eine virtuelle Abbildung, welche auf einer Anzeigeeinheit 1c des AR-Systems 1 dargestellt wird. Die Anzeigeeinheit 1c stellt die reale Umgebung und die virtuelle Abbildung in Bezug zueinander dar. Insbesondere können die von der Erfassungseinheit 1a aufgezeichneten Bildaufnahmen mit der virtuellen Abbildung so überlagert werden, dass der Eindruck entsteht, dass es sich bei der virtuellen Abbildung um ein oder mehrere Objekte handelt, welche sich in der realen Umgebung befinden. Bei den virtuellen Objekten der virtuellen Abbildung kann es sich dabei um zweidimensionale und/oder dreidimensionale Objekte handeln.

Ferner können die Prozessdaten der Arbeitseinheit 3 Daten über programmierte und/oder mögliche Bewegungen, insbesondere Bewegungsabfolgen, der Arbeitseinheit 3 umfassen. Die Prozessdaten können auch Daten über einen Prozessschritt und/oder einen Arbeitslebenszyklus der Arbeitseinheit 3 umfassen, beispielsweise können die Prozessdaten Informationen darüber geben, welcher Prozessschritt in einer Phase eines Arbeitslebenszyklus ausgeführt wird.

Die Steuereinheit kann die Prozessdaten der Arbeitseinheit 3 beispielsweise in Echtzeit verarbeiten und somit die virtuelle Abbildung an einen Betrieb der Arbeitseinheit 3 in Echtzeit anpassen. Die virtuelle Abbildung kann beispielsweise eine visualisierte Bewegungsabfolge der Arbeitseinheit 3 darstellen, Hinweise und/oder jede beliebige zweidimensionale und/oder dreidimensionale Abbildung darstellen. Die virtuelle Abbildung kann eine Vielzahl von unterschiedlichen virtuellen Objekten umfassen. Beispielsweise kann ein erstes virtuelles Objekt der virtuellen Abbildung eine virtuelle Darstellung der Arbeitseinheit 3 darstellen, während ein zweites virtuelles Objekt der virtuellen Abbildung einen Hinweis, wie beispielsweise einen Pfeil, ein Ausrufezeichen, ein Textfeld bzw. eine Textblase und/oder eine geometrische Form wie einen Kreis darstellt. Die Anzeigedauer von unterschiedlichen virtuellen Objekten ist vorzugsweise aufeinander abgestimmt.

Zusätzlich werden über eine Audioausgabeeinheit 1d, wie beispielsweise einen Lautsprecher, Audiosignale abgespielt und für den Anwender A bereitgestellt. Das AR-System 1 in Fig. 1 umfasst ein Smartphone, wobei die einzelnen Einheiten des AR-Systems 1 gemeinsam in dem Smartphone integriert sind. Beispielsweise umfasst die Erfassungseinheit 1a eine Smartphone-Frontkamera und/oder - Rückkamera, die Kommunikationseinheit 1b einen Sender und/oder Empfänger, die Steuereinheit eine CPU, die Anzeigeeinheit 1c ein Display und die Audioausgabeeinheit 1d einen Lautsprecher. Das AR-System 1 kann aber auch eine AR-Brille, ein Helmdisplay, ein elektronisches Kommunikationsgerät und/oder ein Touchpad umfassen.

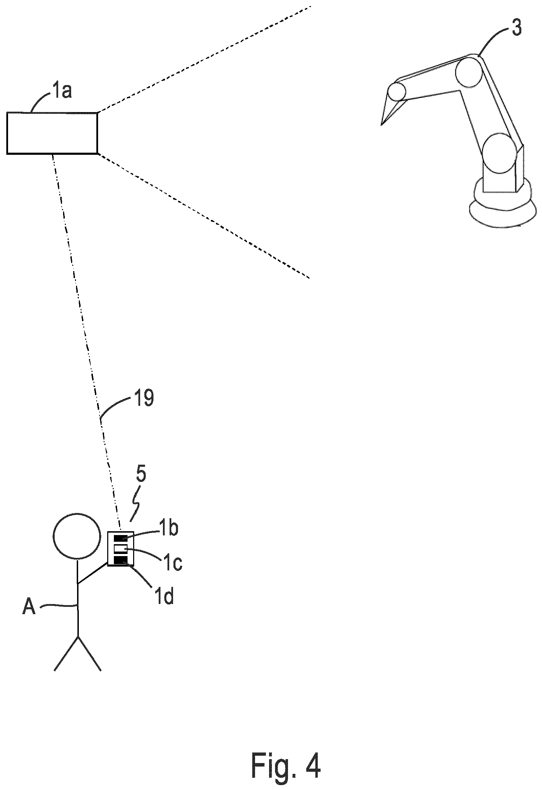

Das AR-System 1 in Fig. 1 umfasst gleichzeitig ein digitales Endgerät 5. Es ist jedoch zu verstehen, dass das digitale Endgerät 5 auch weniger oder mehr Komponenten als die hier beschriebenen umfassen kann. Beispielsweise ist die Erfassungseinheit 1a in Fig. 4 Bestandteil des AR-Systems 1, aber kein Bestandteil des digitalen Endgeräts 5.

Wenn der Anwender A eine Unterweisung startet, so wird über die Erfassungseinheit 1a die reale Umgebung, in der sich die Arbeitseinheit 3 befindet, erfasst und auf der Anzeigeeinheit 1c auf dem digitalen Endgerät 5 dargestellt. Durchläuft die auf der Anzeigeeinheit 1c dargestellte Arbeitseinheit 3 die einzelnen Prozessschritte bzw. -abläufe der Arbeitseinheit 3, so wird auf der Anzeigeeinheit 1c eine virtuelle Abbildung anhand der von der Arbeitseinheit 3 gesendeten Prozessdaten erzeugt und dargestellt, welche dem Anwender A beim Durchlaufen der Unterweisung helfen bzw. ihn unterstützen soll. Zusätzlich werden über die Audioausgabeeinheit 1d Audiosignale ausgegeben, welche den Anwender A ebenfalls bei der Durchführung der Unterweisung unterstützen sollen.

Die virtuelle Abbildung kann beispielsweise eine virtuelle Abbildung der Arbeitseinheit 3 bzw. eine virtuelle Abbildung der Bewegung der Arbeitseinheit 3, geometrische Formen wie beispielsweise Kreise, Rechtecke, Dreiecke und/oder andere geometrische Formen, farbliche Markierungen oder Hervorhebungen und/oder andere für eine Unterweisung nützliche Abbildungen umfassen. Ferner können die von der Audioausgabeeinheit 1c ausgegebenen Audiosignale Warnhinweise, Verhaltensregeln und -anweisungen, Bedienungshilfen bzw. -anleitungen und/oder andere für die Unterweisung nützliche Audiosignale umfassen. Das Audiosignal kann eine weibliche und/oder männliche Stimme umfassen. Zusätzlich können Unterweisungsvideos in Gebärdensprache in einem Fenster auf der Anzeigeeinheit ausgegeben werden, welche einen entsprechenden Inhalt des Audiosignals wiedergeben.

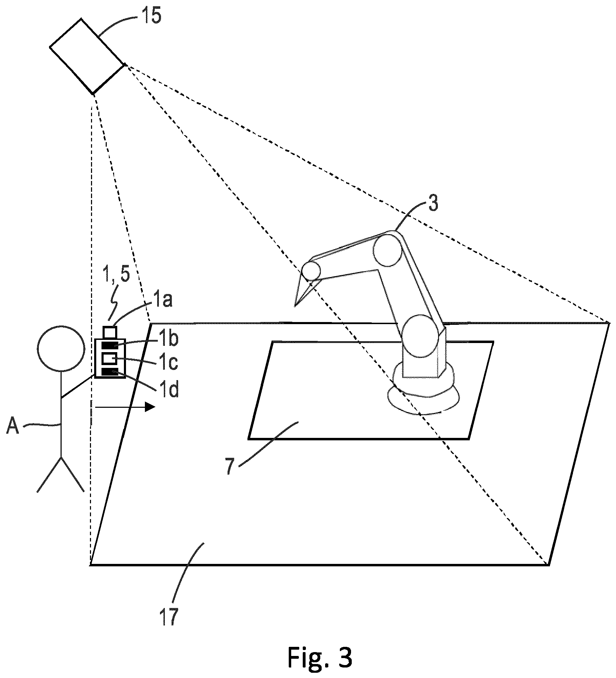

Die angezeigte virtuelle Abbildung und das ausgegebene Audiosignal können situativ, d.h. auf die Veränderung eines Zustands reagierend, und/oder situationsunabhängig, d.h. unabhängig von einer Änderung eines Zustands, erfolgen. In Fig. 3 ist eine beispielhafte Ausführungsform eines situativen AR-Systems dargestellt.

Es ist auch möglich, dass eine Vielzahl von Anwendern gleichzeitig über verschiedene digitale Endgeräte eines AR-Systems unterwiesen werden. Bei einer solchen Unterweisung mehrerer Anwender kann beispielsweise jeder Anwender eine Unterweisung über ein digitales Endgerät individuell durchführen, d.h. die auf einem Endgerät angezeigte virtuelle Abbildung kann sich beispielsweise von einer auf einem anderen Endgerät angezeigten virtuellen Abbildung unterscheiden. Somit können der Ablauf der Unterweisung und der Inhalt der Unterweisung an einen jeweiligen Anwender angepasst werden.

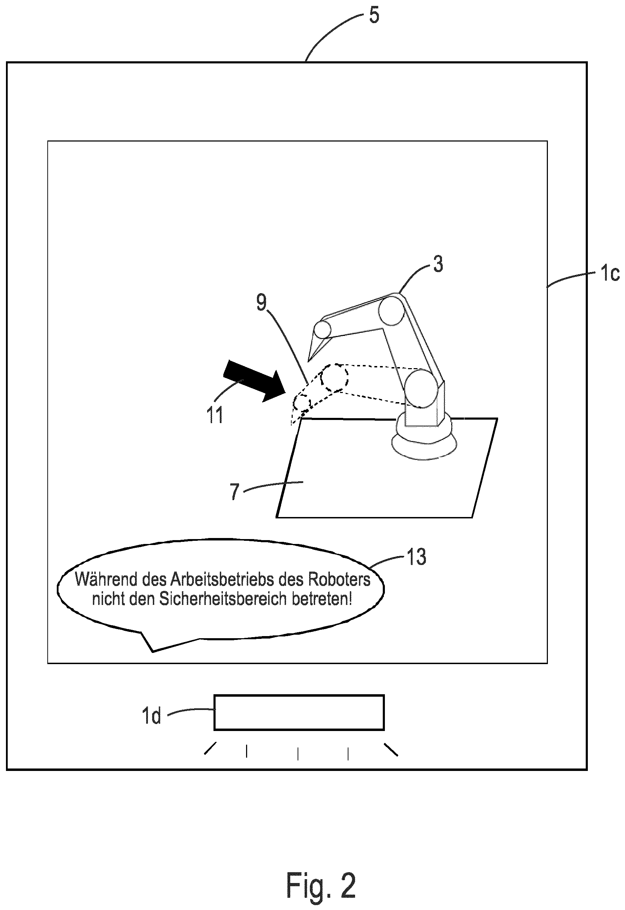

Fig. 2 ist eine schematische Darstellung des digitalen Endgeräts 5, welches die Anzeigeeinheit 1c, die Audioausgabeeinheit 1d und die nicht gezeigte Kommunikationseinheit 1b und Steuereinheit umfasst. Auf der Anzeigeeinheit 1c ist die reale Umgebung anhand der Umgebungsdaten der Erfassungseinheit 1a dargestellt. In der von der Erfassungseinheit 1a erfassten realen Umgebung befindet sich die Arbeitseinheit 3 (Industrieroboter), die sich in einem Sicherheitsbereich 7 befindet. Der Sicherheitsbereich 7 definiert beispielsweise einen Bereich, in dem die Arbeitseinheit 3 agiert, d.h. außerhalb des Sicherheitsbereichs 7 ist eine Kollision zwischen einem Anwender A und der Arbeitseinheit 3 nicht möglich. Durchläuft ein Anwender A eine Unterweisung mittels des AR-Systems 1, wird ihm mittelts einer virtuellen Darstellung 9 der Arbeitseinheit 3 die Bewegungen und insbesondere der Bewegungsradius der Arbeitseinheit 3 auf der Anzeigeeinheit 1c demonstriert. Zusätzlich zur virtuellen Darstellung 9 der Arbeitseinheit 3 wird der Sicherheitsbereich 7 mittels einer weiteren virtuellen Abbildung farblich hervorgehoben, indem der Sicherheitsbereich beispielsweise mit einer auffälligen Farbe markiert wird. Zusätzlich zeigt ein virtuelles Objekt in Form eines virtuellen Pfeils 11 dem Anwender A während des Durchlaufens der Unterweisung an, auf welchen Bereich der Anwender A seine Aufmerksamkeit richten muss. Ferner wird dem Anwender A durch ein Textfeld 15 ein Text und insbesondere ein Hinweis vermittelt. Über die Audioausgabeeinheit 1d kann der in dem Textfeld 15 enthaltene Text wiedergegeben werden. Alternativ kann auch ein von dem in dem Textfeld 15 angezeigtem Text abweichender Text als Audiosignal wiedergegeben werden.

Es ist zu verstehen, dass die in Fig. 2 dargestellte Aufnahme der Anzeigeeinheit 1c nur eine Momentaufnahme während des Durchlaufens der Unterweisung ist und dass sich die einzelnen virtuellen Objekte während des Durchlaufens der Unterweisung verändern können. Ferner können beim Durchlaufen einer Unterweisung auch virtuelle Abbildungen ohne die Unterstützung durch das Audiosignal angezeigt werden und umgekehrt.

Fig. 3 zeigt eine der Fig. 1 entsprechende Ausführungsform des AR-Systems 1, wobei zusätzlich in der realen Umgebung eine Überwachungseinheit 15 angeordnet ist, die einen Überwachungsraum 17 überwacht. In dem Überwachungsraum 17 befindet sich die Arbeitseinheit 3 sowie der Sicherheitsbereich 7 der Arbeitseinheit 3. Die Überwachungseinheit 15 sendet Sicherheitsdaten an die Kommunikationseinheit 1b des AR-Systems 1, welche von der nicht gezeigten Steuereinheit des AR-Systems 1 verarbeitet werden. Anhand der Sicherheitsdaten der Überwachungseinheit 15 ermittelt die Steuereinheit, ob ein Anwender A in den Überwachungsraum 17 eintritt und/oder sich in dem Überwachungsraum 17 befindet. Ergibt die Ermittlung, dass ein Anwender A den Überwachungsraum 17 betritt, so gibt die Audioausgabeeinheit 1d des AR-Systems 1 ein erstes Audiosignal aus, um den Anwender A darauf hinzuweisen, dass er den Überwachungsraum 17 betreten hat. Zusätzlich oder alternativ kann die Arbeitseinheit 3 seine Geschwindigkeit reduzieren, um den Schaden bei einer potentiellen Kollision mit dem Anwender A zu reduzieren. Ferner wird ein zweites von dem ersten Audiosignal abweichendes Audiosignal ausgegeben, wenn die Verarbeitung der Sicherheitsdaten durch die Steuereinheit ergibt, dass der Anwender A den Sicherheitsbereich 7, der ebenfalls von der Überwachungseinheit 19 erfasst wird, betritt. Zusätzlich oder alternativ kann die Arbeitseinheit 3 in einem solchen Fall den Arbeitsbetrieb beenden und stoppen.

Fig. 4 zeigt eine Ausführungsform des AR-Systems 1, bei der sich die Erfassungseinheit 1a in unmittelbarer Nähe der Arbeitseinheit 3 befindet, während sich der Anwender A und das digitale Endgerät 5, welches die Kommunikationseinheit 1b, die Anzeigeeinheit 1c und die Audioausgabeeinheit 1d umfasst, nicht in unmittelbarer Nähe der Arbeitseinheit 3 befinden. In einem solchen Fall kommunizieren die Erfassungseinheit 1a und das digitale Endgerät 5 bzw. die Kommunikationseinheit 1b über eine Fernverbindung 19, d.h. beispielsweise eine LAN-, VPN- und/oder Mobilfunkverbindung, miteinander, so dass der Anwender A nicht physisch vor Ort bzw. in unmittelbarer Nähe der Arbeitseinheit 3 sein muss, um an einer Unterweisung teilzunehmen. Folglich ist mittels einer derartigen Ausführungsform der Erfindung eine Teleunterweisung über beliebige Distanzen zwischen dem Anwender A bzw. dem digitalen Endgerät 5 und der Arbeitseinheit 3 bzw. der Erfassungseinheit 1a möglich. Beispielsweise kann ein Mitarbeiter eines Unternehmens mittels eines digitalen Endgeräts 5 von seiner privaten Wohnung aus eine Unterweisung erhalten, indem eine Kamera in den Räumlichkeiten des Unternehmens Bild- und/oder Videodaten, welche die in den Räumlichkeiten des Unternehmens befindliche Arbeitseinheit 3 zeigen, an das digitale Endgerät 5 sendet, auf dem der Anwender A die Unterweisung erhält. In einem solchen Fall wäre sogar eine interaktive Gruppenunterweisung - ähnlich einem Webinar - möglich.

Die oben erwähnte bidirektionale Schnittstelle, mit der bestimmte Abschnitte wiederholt werden können. Könnte dann nur von einem "Master durchgeführt" werden - beispielsweise dem Leiter der Unterweisung. Die Master-Fähigkeit kann auch an andere Teilnehmer weitergegeben werden. Das kann aber nur für einen Anwender pro Zeitintervall gestattet sein.

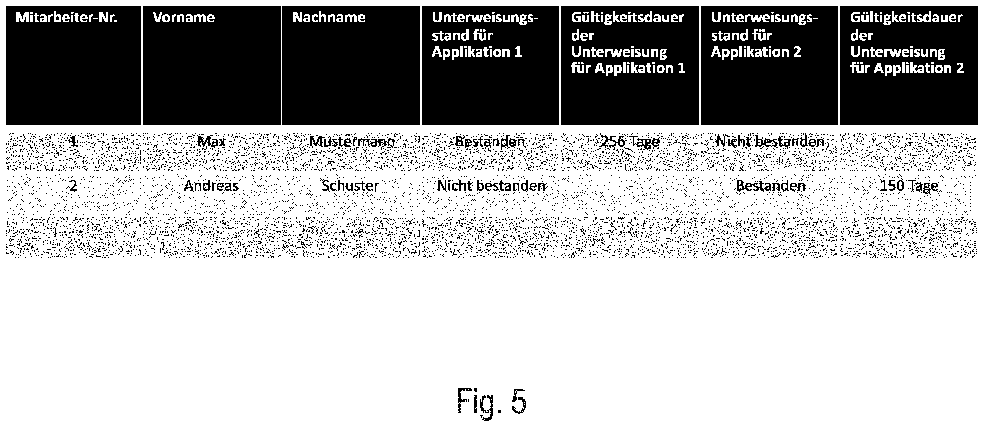

Fig. 5 zeigt eine beispielhafte Darstellung einer Anwenderdatenbank, welche Informationen zu einem Anwender A einer Applikation speichert. Die Anwenderdatenbank umfasst Informationen zu einer Mitarbeiter-Nummer, einem Vornamen, einem Nachnamen, einem Unterweisungsstand hinsichtlich einer ersten Applikation, einer Gültigkeitsdauer der Unterweisung hinsichtlich einer ersten Applikation, einem Unterweisungsstand hinsichtlich einer zweiten Applikation und einer Gültigkeitsdauer der Unterweisung hinsichtlich einer zweiten Applikation. Der Unterweisungsstand des Anwenders A kann mit einem Test wie beispielsweise einem Multiple-Choice-Test ermittelt werden, welcher nach einer durchgeführten Unterweisung von dem Anwender durchgeführt werden muss, um seinen entsprechenden Unterweisungsstand zu bestimmen. Beantwortet der Anwender A mehr als eine vorab festgelegte Anzahl an Fragen nach der Unterweisung für eine erste Applikation richtig, so wird in der Spalte "Unterweisungsstand hinsichtlich einer ersten Applikation" beispielsweise der Wert "bestanden" oder "1" eingetragen, während in allen anderen Fällen der Wert "nicht bestanden" oder "0" eingetragen wird.

Ferner gibt die Gültigkeitsdauer der Unterweisung an, wie viele Tage eine bestandene Unterweisung gültig ist bzw. in wie vielen Tagen eine Auffrischung einer Unterweisung hinsichtlich einer Applikation notwendig wird.

Zusätzlich oder alternativ kann auch ein Qualifikationslevel hinsichtlich einer Applikation in der Anwenderdatenbank festgelegt werden. Beispielsweise kann je nach erreichter Punktzahl bzw. je nach Anzahl an richtig beantworteten Fragen in einem Test ein Qualifikationslevel für einen Anwender A ermittelt und in der Anwenderdatenbank eingetragen werden. Basierend auf dem Qualifikationslevel können beispielsweise unterschiedliche Nutzungsrechte und/oder Zugriffsrechte auf Inhalte des AR-Systems 1 für einen Anwender A festgelegt werden. Solche Anwenderdatenbanken mit Qualifikationsleveln können in einer zentralen Datenbank des jeweiligen Unternehmens hinterlegt sein.

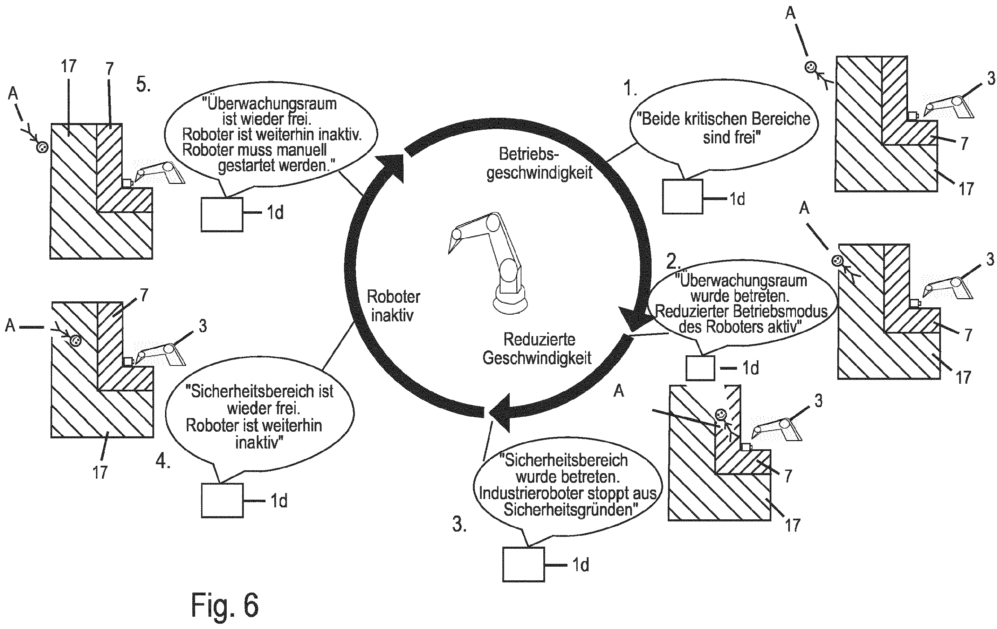

Fig. 6 zeigt unterschiedliche Bewegungsphasen der Arbeitseinheit 3 und eine zugehörige Audiowiedergabe durch das AR-System 1, wenn sich ein Anwender A der Arbeitseinheit 3 nähert. Das AR-System 1 fungiert in Fig. 6 als Warnsystem. Zur besseren Übersicht wurde in Fig. 6 nur die Audioausgabeeinheit 1d des AR-Systems 1 dargestellt.

In einer ersten Phase befindet sich der Anwender A mit dem AR-System 1 außerhalb des Überwachungsraums 17 und des Sicherheitsbereichs 7. Die nicht gezeigte Überwachungseinheit 15 erfasst den Überwachungsraum 17 und den Sicherheitsbereich 7 und sendet Sicherheitsdaten an das AR-System 1. Die Steuereinheit des AR-Systems 1 verarbeitet die Sicherheitsdaten und ermittelt, dass sich der Anwender A außerhalb des Überwachungsraums 17 befindet bzw. dass sich der Anwender A nicht in dem Überwachungsraum 17 befindet. Die Audioausgabeeinheit 1d gibt infolgedessen ein Audiosignal aus, welches wiedergibt, dass beide kritischen Bereiche frei sind. Alternativ kann die Audioausgabeeinheit 1d auch kein Audiosignal ausgeben. **In** einer zweiten Phase ermittelt das AR-System 1, dass der Anwender A den Überwachungsraum 17 betreten hat; jedoch nicht den Sicherheitsbereich 7. Infolgedessen wird ein zweites Audiosignal ausgegeben, welches wiedergibt, dass der Überwachungsraum betreten wurde und ein reduzierter Betriebsmodus der Arbeitseinheit 3 aktiv ist.

**In** einer dritten Phase ermittelt das AR-System 1, dass der Anwender A auch den Sicherheitsbereich 7 betritt und gibt infolgedessen über die Audioausgabeeinheit 1d ein Audiosignal aus, welches wiedergibt, dass der Sicherheitsbereich betreten wurde und die Arbeitseinheit 3 aus Sicherheitsgründen stoppt.

**In** einer vierten Phase verlässt der Anwender A den Sicherheitsbereich 7 und befindet sich weiterhin im Überwachungsraum 17. Die Audioausgabeeinheit 1d gibt infolgedessen ein Audiosignal aus, welches wiedergibt, dass der Sicherheitsbereich 7 verlassen wurde und die Arbeitseinheit 3 weiterhin inaktiv ist.

**In** einer fünften Phase ermittelt das AR-System 1, dass der Anwender A sowohl den Sicherheitsbereich 7 als auch den Überwachungsraum 17 verlassen hat und gibt infolgedessen über die Audioausgabeeinheit 1d ein Audiosignal aus, das wiedergibt, dass der Überwachungsraum verlassen wurde und die Arbeitseinheit 3 weiterhin inaktiv ist und manuell gestartet werden muss.

### Bezugszeichenliste

- 1: Augmented-Reality-System
- 1a: Erfassungseinheit
- 1b: Kommunikationseinheit
- 1c: Anzeigeeinheit
- 1d: Audioausgabeeinheit
- 3: Arbeitseinheit
- 3a: Steuerung
- 5: digitales Endgerät
- 7: Sicherheitsbereich
- 9: virtuelle Darstellung der Arbeitseinheit
- 11: virtueller Pfeil
- 13: Textfeld
- 15: Überwachungseinheit
- 17: Überwachungsraum
- 19: Fernverbindung

## Patentansprüche

1. Augmented-Reality-System (AR-System) (1) zum Unterrichten eines Anwenders (A) einer Applikation, umfassend:
eine Erfassungseinheit (1a), die eine reale Umgebung erfasst und als Umgebungsdaten bereitstellt, wobei zumindest eine Arbeitseinheit (3) in der Umgebung angeordnet ist;
eine Kommunikationseinheit (1b), die Prozessdaten von der Arbeitseinheit (3) empfängt;
eine Steuereinheit, die die Prozessdaten und die Umgebungsdaten verarbeitet, wobei eine virtuelle Abbildung anhand der Prozessdaten erstellbar ist;
eine Anzeigeeinheit (1c), die einem Anwender die reale Umgebung und die virtuelle Abbildung in Bezug zueinander anzeigt;
und eine Audioausgabeeinheit (1d), die auf Basis der Prozessdaten Audiosignale zur Unterweisung eines Anwenders (A) ausgibt,
wobei vorzugsweise die Audiosignale auf die virtuelle Abbildung abgestimmt sind,
wobei eine Unterweisung eine oder eine Mehrzahl der folgenden Komponenten umfasst: Unterrichten eines Anwenders, Schulen eines Anwenders, Belehren eines Anwenders, Unterstützen eines Anwenders, Instruieren eines Anwenders, Angabe von Hinweisen hinsichtlich einer Benutzung der Arbeitseinheit (3), Angabe von Gefahren- und/oder Warnhinweisen und Angabe von allgemeinen Hinweisen,
wobei die Prozessdaten Daten zur Identifizierung eines Prozessschritts der Arbeitseinheit (3) umfassen und die Audioausgabeeinheit (1d) ein einem identifizierten Prozessschritt entsprechendes Audiosignal ausgibt und/oder die Anzeigeeinheit (1c) eine einem identifizierten Prozessschritt entsprechende virtuelle Abbildung anzeigt,
wobei das AR-System (1) einen Speicher umfasst, in dem eine Vielzahl von Audiosignaldaten und/oder Augmentierungsdaten gespeichert sind, wobei die Audiosignaldaten und Augmentierungsdaten den Prozessschritten und/oder Phasen eines Arbeitslebenszyklus zuordenbar und entsprechend kategorisiert sind.

2. AR-System (1) nach Anspruch 1,
wobei die Audioausgabeeinheit dazu ausgebildet ist, die Audiodaten, und/oder die Anzeigeeinheit dazu ausgebildet ist, die Augmentierungsdaten vor einem in Zukunft eintretenden Prozessschritt und/oder zu Beginn eines Prozessschritts abzuspielen.

3. AR-System (1) nach einem der Ansprüche 1 oder 2,
wobei die Phasen eines Arbeitslebenszyklus umfassen: Inbetriebnahme, Normalbetrieb, Wartung, Umbau und/oder Abbau der Applikation.

4. AR-System (1) nach einem der vorstehenden Ansprüche,
wobei das AR-System (1) und die Arbeitseinheit (3) dazu ausgebildet sind, bidirektional zu kommunizieren, wobei das AR-System (1) dazu ausgebildet ist, die Arbeitseinheit (3) zu steuern und/oder zu beeinflussen.

5. AR-System (1) nach einem der vorstehenden Ansprüche,
wobei die Anzeigeeinheit (1c) zusätzlich dazu ausgebildet ist, Textnachrichten anzuzeigen.

6. AR-System (1) nach einem der vorstehenden Ansprüche,
wobei das AR-System (1) dazu ausgebildet ist, einen Unterweisungsstand des Anwenders (A) mittels eines Tests, insbesondere eines Multiple-Choice-Tests, zu prüfen und basierend auf einem Testergebnis den Unterweisungsstand des Anwenders (A) in einer Anwenderdatenbank einzutragen und/oder zu aktualisieren.

7. AR-System (1) nach Anspruch 6,
wobei das AR-System (1) eine Unterweisungsstandermittlungseinheit umfasst, die dazu ausgebildet ist, eine Identität des Anwenders (A) anhand von Personenidentifikationsdaten zu ermitteln und den Unterweisungsstand des Anwenders (A) anhand der ermittelten Identität mittels der Anwenderdatenbank zu ermitteln.

8. AR-System (1) nach einem der Ansprüche 6 und 7,
wobei die Arbeitseinheit (3) dazu ausgebildet ist, einen Betriebsmodus der Arbeitseinheit (3) basierend auf dem Unterweisungsstand des Anwenders (A) einzustellen.

9. AR-System (1) nach einem der Ansprüche 6 bis 8,
wobei das AR-System (1) dazu ausgebildet ist, einen Nutzungsbereich und/oder Inhalte des AR-Systems (1) basierend auf dem Unterweisungsstand des Anwenders (A) zu beschränken oder zu erweitern.

10. AR-System (1) nach einem der vorstehenden Ansprüche,
wobei die reale Umgebung und/oder die Arbeitseinheit eine Markierung umfasst, welche von dem AR-System (1) als Bezugspunkt und/oder zum Erkennen der Arbeitseinheit (3) verwendet wird.

11. AR-System (1) nach einem der vorstehenden Ansprüche,
wobei eine Überwachungseinheit (15) dazu ausgebildet ist, einen Überwachungsraum (17) zu überwachen und Sicherheitsdaten an die Kommunikationseinheit (1b) zu senden, wobei die Sicherheitsdaten von der Steuereinheit verarbeitet werden, und die Audioausgabeeinheit (1d) dazu ausgebildet ist, ein Audiosignal auszugeben, wenn die Verarbeitung der Sicherheitsdaten ergibt, dass der Anwender (A) den Überwachungsraum (17) der Überwachungseinheit (15) betritt.

12. Verfahren zum Unterrichten eines Anwenders (A) einer Applikation mittels eines Augmented-Reality-Systems (1), welches umfasst, dass:
eine reale Umgebung erfasst und als Umgebungsdaten bereitgestellt wird, wobei zumindest eine Arbeitseinheit (3) in der Umgebung angeordnet ist;
Prozessdaten von der Arbeitseinheit (3) empfangen werden;
die Prozessdaten und die Umgebungsdaten verarbeitet werden, wobei eine virtuelle Abbildung anhand der Prozessdaten erstellt wird;
einem Anwender die reale Umgebung und die virtuelle Abbildung in Bezug zueinander angezeigt werden;
auf Basis der Prozessdaten Audiosignale zur Unterweisung eines Anwenders ausgegeben werden,
wobei vorzugsweise die Audiosignale auf die virtuelle Abbildung abgestimmt sind,
wobei eine Unterweisung eine oder eine Mehrzahl der folgenden Komponenten umfasst: Unterrichten eines Anwenders, Schulen eines Anwenders, Belehren eines Anwenders, Unterstützen eines Anwenders, Instruieren eines Anwenders, Angabe von Hinweisen hinsichtlich einer Benutzung der Arbeitseinheit (3), Angabe von Gefahren- und/oder Warnhinweisen und Angabe von allgemeinen Hinweisen,
wobei die Prozessdaten Daten zur Identifizierung eines Prozessschritts der Arbeitseinheit (3) umfassen und die Audioausgabeeinheit (1d) ein einem identifizierten Prozessschritt entsprechendes Audiosignal ausgibt und/oder die Anzeigeeinheit (1c) eine einem identifizierten Prozessschritt entsprechende virtuelle Abbildung anzeigt,
wobei das AR-System (1) einen Speicher umfasst, in dem eine Vielzahl von Audiosignaldaten und/oder Augmentierungsdaten gespeichert sind, wobei die Audiosignaldaten und Augmentierungsdaten den Prozessschritten und/oder Phasen eines Arbeitslebenszyklus zuordenbar und entsprechend kategorisiert sind.

13. Digitales Endgerät (5) für ein Augmented-Reality-System (1) zum Unterrichten eines Anwenders (A) einer Applikation, welches umfasst:
eine Kommunikationseinheit (1b), die Prozessdaten von zumindest einer Arbeitseinheit (3) und Umgebungsdaten von zumindest einer Erfassungseinheit (1a), die eine reale Umgebung erfasst, empfängt, wobei die Arbeitseinheit (3) in der Umgebung angeordnet ist;
eine Steuereinheit, die die Prozessdaten und Umgebungsdaten verarbeitet, wobei eine virtuelle Abbildung anhand der Prozessdaten erstellbar ist;
eine Anzeigeeinheit (1c), die einem Anwender (A) die reale Umgebung und die virtuelle Abbildung in Bezug zueinander anzeigt;
und eine Audioausgabeeinheit (1d), die auf Basis der Prozessdaten Audiosignale zur Unterweisung eines Anwenders ausgibt,
wobei vorzugsweise die Audiosignale auf die virtuelle Abbildung abgestimmt sind,
wobei eine Unterweisung eine oder eine Mehrzahl der folgenden Komponenten umfasst: Unterrichten eines Anwenders, Schulen eines Anwenders,
Belehren eines Anwenders, Unterstützen eines Anwenders, Instruieren eines Anwenders, Angabe von Hinweisen hinsichtlich einer Benutzung der Arbeitseinheit (3), Angabe von Gefahren- und/oder Warnhinweisen und Angabe von allgemeinen Hinweisen,
wobei die Prozessdaten Daten zur Identifizierung eines Prozessschritts der Arbeitseinheit (3) umfassen und die Audioausgabeeinheit (1d) ein einem identifizierten Prozessschritt entsprechendes Audiosignal ausgibt und/oder die Anzeigeeinheit (1c) eine einem identifizierten Prozessschritt entsprechende virtuelle Abbildung anzeigt,
wobei das AR-System (1) einen Speicher umfasst, in dem eine Vielzahl von Audiosignaldaten und/oder Augmentierungsdaten gespeichert sind, wobei die Audiosignaldaten und Augmentierungsdaten den Prozessschritten und/oder Phasen eines Arbeitslebenszyklus zuordenbar und entsprechend kategorisiert sind.

## Claims

1. An augmented reality system (AR system) (1) for teaching a user (A) of an application, comprising:
a detection unit (1a) which detects a real environment and provides it as environmental data, wherein at least one work unit (3) is arranged in the environment;
a communication unit (1b) which receives process data from the work unit (3);
a control unit which processes the process data and the environmental data, wherein a virtual image can be created based on the process data;
a display unit (1c) which displays the real environment and the virtual image in relation to one another to a user; and
an audio output unit (1d) which, on the basis of the process data, outputs audio signals for instructing a user (A),
wherein the audio signals are preferably matched to the virtual image,
wherein an instruction comprises one or a plurality of the following components: teaching a user, training a user, lecturing a user, assisting a user, instructing a user, specifying information with respect to a use of the work unit (3), specifying hazard warnings and/or warnings, and specifying general information,
wherein the process data comprise data for identifying a process step of the work unit (3) and the audio output unit (1d) outputs an audio signal corresponding to an identified process step and/or the display unit (1c) displays a virtual image corresponding to an identified process step,
wherein the AR system (1) comprises a memory in which a plurality of audio signal data and/or augmentation data are stored, wherein the audio signal data and augmentation data can be associated with the process steps and/or phases of a working life cycle and are categorized accordingly.

2. An AR system (1) according to claim 1,
wherein the audio output unit is configured to play back the audio data and/or the display unit is configured to play back the augmentation data before a process step which will occur in the future and/or at the start of a process step.

3. An AR system (1) according to one of the claims 1 or 2,
wherein the phases of a working life cycle comprise: putting into operation, normal operation, maintenance, conversion and/or dismantling of the application.

4. An AR system (1) according to any one of the preceding claims,
wherein the AR system (1) and the work unit (3) are configured to communicate bidirectionally, wherein the AR system (1) is configured to control and/or to influence the work unit (3).

5. An AR system (1) according to any one of the preceding claims,
wherein the display unit (1c) is additionally configured to display text messages.

6. An AR system (1) according to any one of the preceding claims,
wherein the AR system (1) is configured to check an instruction level of the user (A) by means of a test, in particular a multiple choice test, and to enter and/or to update the instruction level of the user (A) in a user database based on a test result.

7. An AR system (1) according to claim 6,
wherein the AR system (1) comprises an instruction level determination unit which is configured to determine an identity of the user (A) based on personal identification data and to determine the instruction level of the user (A) based on the determined identity by means of the user database.

8. An AR system (1) according to one of the claims 6 and 7,
wherein the work unit (3) is configured to set an operating mode of the work unit (3) based on the instruction level of the user (A).

9. An AR system (1) according to any one of the claims 6 to 8,
wherein the AR system (1) is configured to restrict or to extend a range of use and/or contents of the AR system (1) based on the instruction level of the user (A).

10. An AR system (1) according to any one of the preceding claims,
wherein the real environment and/or the work unit comprises/comprise a marking which is used by the AR system (1) as a reference point and/or for recognizing the work unit (3).

11. An AR system (1) according to any one of the preceding claims,
wherein a monitoring unit (15) is configured to monitor a monitored zone (17) and to transmit safety data to the communication unit (1b), wherein the safety data are processed by the control unit, and the audio output unit (1d) is configured to output an audio signal when the processing of the safety data reveals that the user (A) is entering the monitored zone (17) of the monitoring unit (15).

12. A method of teaching a user (A) of an application by means of an augmented reality system (1), said method comprising that:
a real environment is detected and is provided as environmental data, wherein at least one work unit (3) is arranged in the environment;
process data are received from the work unit (3);
the process data and the environmental data are processed, wherein a virtual image is created based on the process data;
the real environment and the virtual image are displayed in relation to one another to a user; and
audio signals for instructing a user are output on the basis of the process data,
wherein the audio signals are preferably matched to the virtual image,
wherein an instruction comprises one or a plurality of the following components: teaching a user, training a user, lecturing a user, assisting a user, instructing a user, specifying information with respect to a use of the work unit (3), specifying hazard warnings and/or warnings, and specifying general information,
wherein the process data comprise data for identifying a process step of the work unit (3) and the audio output unit (1d) outputs an audio signal corresponding to an identified process step and/or the display unit (1c) displays a virtual image corresponding to an identified process step,
wherein the AR system (1) comprises a memory in which a plurality of audio signal data and/or augmentation data are stored, wherein the audio signal data and augmentation data can be associated with the process steps and/or phases of a working life cycle and are categorized accordingly.

13. A digital end device (5) for an augmented reality system (1) for teaching a user (A) of an application, said digital end device (5) comprising:
a communication unit (1b) which receives process data from at least one work unit (3) and environmental data from at least one detection unit (1a) which detects a real environment, wherein the work unit (3) is arranged in the environment;
a control unit which processes the process data and environmental data,
wherein a virtual image can be created based on the process data;
a display unit (1c) which displays the real environment and the virtual image in relation to one another to a user (A); and
an audio output unit (1d) which, on the basis of the process data, outputs audio signals for instructing a user,
wherein the audio signals are preferably matched to the virtual image,
wherein an instruction comprises one or a plurality of the following components: teaching a user, training a user, lecturing a user, assisting a user, instructing a user, specifying information with respect to a use of the work unit (3), specifying hazard warnings and/or warnings, and specifying general information,
wherein the process data comprise data for identifying a process step of the work unit (3) and the audio output unit (1d) outputs an audio signal corresponding to an identified process step and/or the display unit (1c) displays a virtual image corresponding to an identified process step,
wherein the AR system (1) comprises a memory in which a plurality of audio signal data and/or augmentation data are stored, wherein the audio signal data and augmentation data can be associated with the process steps and/or phases of a working life cycle and are categorized accordingly.

## Revendications

1. Système de réalité augmentée (système AR) (1) pour enseigner à un utilisateur (A) d'une application, comprenant :
une unité de détection (1a) qui détecte un environnement réel et le met à disposition sous forme de données d'environnement, au moins une unité de travail (3) étant disposée dans l'environnement ;
une unité de communication (1b) qui reçoit des données de processus de l'unité de travail (3) ;
une unité de commande qui traite les données de processus et les données d'environnement, une image virtuelle pouvant être créée à l'aide des données de processus ;
une unité d'affichage (1c) qui affiche l'environnement réel et l'image virtuelle l'un par rapport l'autre pour un utilisateur ;
et une unité de sortie audio (1d) qui, en se basant sur les données de processus, émet des signaux audio pour instruire un utilisateur (A),
dans lequel
les signaux audio sont de préférence adaptés à l'image virtuelle,
une instruction comprend un ou plusieurs des éléments suivants : enseigner à un utilisateur, former un utilisateur, apprendre à un utilisateur, assister un utilisateur, instruire un utilisateur, donner des indications concernant l'utilisation de l'unité de travail (3), donner des indications de danger et/ou d'avertissement et donner des indications générales,
les données de processus comprennent des données pour identifier une étape de processus de l'unité de travail (3), et l'unité de sortie audio (1d) émet un signal audio correspondant à une étape de processus identifiée et/ou l'unité d'affichage (1c) affiche une image virtuelle correspondant à une étape de processus identifiée,
le système AR (1) comprend une mémoire dans laquelle sont stockées une pluralité de données de signal audio et/ou de données d'augmentation, les données de signal audio et les données d'augmentation pouvant être attribuées aux étapes de processus et/ou aux phases d'un cycle de vie de travail et étant catégorisées en correspondance.

2. Système AR (1) selon la revendication 1,
dans lequel l'unité de sortie audio est conçue pour lire les données audio, et/ou l'unité d'affichage est conçue pour lire les données d'augmentation avant une étape de processus se produisant dans le futur et/ou au début d'une étape de processus.

3. Système AR (1) selon l'une des revendications 1 ou 2,
dans lequel les phases d'un cycle de vie de travail comprennent : mise en service, fonctionnement normal, maintenance, transformation et/ou suppression de l'application.

4. Système AR (1) selon l'une des revendications précédentes,
dans lequel le système AR (1) et l'unité de travail (3) sont conçus pour communiquer de manière bidirectionnelle, le système AR (1) étant conçu pour commander et/ou influencer l'unité de travail (3).

5. Système AR (1) selon l'une des revendications précédentes,
dans lequel l'unité d'affichage (1c) est en outre conçue pour afficher des messages de texte.

6. Système AR (1) selon l'une des revendications précédentes,
dans lequel le système AR (1) est conçu pour vérifier un niveau d'instruction de l'utilisateur (A) au moyen d'un test, en particulier d'un test à choix multiples, et, en se basant sur un résultat de test, pour enregistrer et/ou mettre à jour le niveau d'instruction de l'utilisateur (A) dans une base de données d'utilisateurs.

7. Système AR (1) selon la revendication 6,
dans lequel le système AR (1) comprend une unité de détermination du niveau d'instruction qui est conçue pour déterminer une identité de l'utilisateur (A) à l'aide de données d'identification de personnes et pour déterminer le niveau d'instruction de l'utilisateur (A) à l'aide de l'identité déterminée au moyen de la base de données d'utilisateurs.

8. Système AR (1) selon l'une des revendications 6 et 7,
dans lequel l'unité de travail (3) est conçue pour régler un mode de fonctionnement de l'unité de travail (3) en se basant sur le niveau d'instruction de l'utilisateur (A).

9. Système AR (1) selon l'une des revendications 6 à 8,
dans lequel le système AR (1) est conçu pour limiter ou étendre une zone d'utilisation et/ou un contenu du système AR (1) en se basant sur le niveau d'instruction de l'utilisateur (A).

10. Système AR (1) selon l'une des revendications précédentes,
dans lequel l'environnement réel et/ou l'unité de travail comprend un repère utilisé par le système AR (1) comme point de référence et/ou pour reconnaître l'unité de travail (3).

11. Système AR (1) selon l'une des revendications précédentes,
dans lequel une unité de surveillance (15) est conçue pour surveiller un espace à surveiller (17) et pour envoyer des données de sécurité à l'unité de communication (1b), les données de sécurité étant traitées par l'unité de commande, et l'unité de sortie audio (1d) est conçue pour émettre un signal audio lorsque le traitement des données de sécurité révèle que l'utilisateur (A) entre dans l'espace à surveiller (17) de l'unité de surveillance (15).

12. Procédé pour enseigner à un utilisateur (A) d'une application au moyen d'un système de réalité augmentée (1), consistant à :
détecter un environnement réel et le mettre à disposition sous forme de données d'environnement, au moins une unité de travail (3) étant disposée dans l'environnement ;
recevoir des données de processus de l'unité de travail (3) ;
traiter les données de processus et les données d'environnement, une image virtuelle étant créée à l'aide des données de processus ;
afficher l'environnement réel et l'image virtuelle l'un par rapport à l'autre pour un utilisateur;
émettre des signaux audio en se basant sur les données de processus pour instruire un utilisateur,
dans lequel
les signaux audio sont de préférence adaptés à l'image virtuelle,
une instruction comprend un ou plusieurs des éléments suivants : enseigner à un utilisateur, former un utilisateur, apprendre à un utilisateur, assister un utilisateur, instruire un utilisateur, donner des indications concernant l'utilisation de l'unité de travail (3), donner des indications de danger et/ou d'avertissement et donner des indications générales,
les données de processus comprennent des données pour identifier une étape de processus de l'unité de travail (3), et l'unité de sortie audio (1d) émet un signal audio correspondant à une étape de processus identifiée et/ou l'unité d'affichage (1c) affiche une image virtuelle correspondant à une étape de processus identifiée,
le système AR (1) comprend une mémoire dans laquelle sont stockées une pluralité de données de signal audio et/ou de données d'augmentation, les données de signal audio et les données d'augmentation pouvant être attribuées aux étapes de processus et/ou aux phases d'un cycle de vie de travail et étant catégorisées en correspondance.

13. Terminal numérique (5) pour un système de réalité augmentée (1) pour enseigner à un utilisateur (A) d'une application, qui comprend :
une unité de communication (1b) qui reçoit des données de processus d'au moins une unité de travail (3) et des données d'environnement d'au moins une unité de détection (1a) qui détecte un environnement réel, l'unité de travail (3) étant disposée dans l'environnement ;
une unité de commande qui traite les données de processus et les données d'environnement, une image virtuelle pouvant être créée à l'aide des données de processus ;
une unité d'affichage (1c) qui affiche l'environnement réel et l'image virtuelle l'un par rapport l'autre pour un utilisateur (A) ;
et une unité de sortie audio (1d) qui, en se basant sur les données de processus, émet des signaux audio pour instruire un utilisateur,
dans lequel
les signaux audio sont de préférence adaptés à l'image virtuelle,
une instruction comprend un ou plusieurs des éléments suivants : enseigner à un utilisateur, former un utilisateur, apprendre à un utilisateur, assister un utilisateur, instruire un utilisateur, donner des indications concernant l'utilisation de l'unité de travail (3), donner des indications de danger et/ou d'avertissement et donner des indications générales,
les données de processus comprennent des données pour identifier une étape de processus de l'unité de travail (3), et l'unité de sortie audio (1d) émet un signal audio correspondant à une étape de processus identifiée et/ou l'unité d'affichage (1c) affiche une image virtuelle correspondant à une étape de processus identifiée,
le système AR (1) comprend une mémoire dans laquelle sont stockées une pluralité de données de signal audio et/ou de données d'augmentation, les données de signal audio et les données d'augmentation pouvant être attribuées aux étapes de processus et/ou aux phases d'un cycle de vie de travail et étant catégorisées en correspondance.
